# EUROPEAN PATENT APPLICATION

(11) **EP 4 625 514 A1**
(43) Date of publication of application: **01.10.2025**
(21) Application number: 24738542.0
(22) Date of filing: 04.01.2024
(51) Int. Cl.: H01M 4/13, H01M 4/525, H01M 4/131, H01M 4/485, H01M 4/36, H01M 10/0525, H01M 10/054

(54) **LITHIUM ION BATTERY**

(30) Priority: 06.01.2023 CN 202310019580
(71) Applicant: Zhuhai CosMX Battery Co., Ltd., Zhuhai, Guangdong 519180 (CN)
(72) Inventor: ZENG, Jiajiang, Zhuhai, Guangdong 519180 (CN); XIA, Dingguo, Zhuhai, Guangdong 519180 (CN); LI, Suli, Zhuhai, Guangdong 519180 (CN)
(74) Representative: Murgitroyd & Company
(86) International application number: PCT/CN2024/070650
(87) International publication number: WO 2024/146611

(57) **Abstract**

Disclosed is a lithium-ion battery including a positive electrode plate and a negative electrode plate; a positive electrode active material of the positive electrode plate includes a lithium metal oxide represented by Formula 1 or Formula 2; the lithium metal oxide crystallizes in a Cmca space group of a cubic crystal system and exhibits, in XRD, a 002 peak at 2θ of 17.9° to 18.1° and a 131 peak at 2θ of 67.0° to 67.5°. The negative electrode plate includes lithium metal, a negative electrode current collector and a negative electrode active layer that are sequentially stacked; a thickness ratio of the negative electrode plate to the positive electrode plate is m1, and an areal density ratio of the positive electrode plate to the negative electrode plate is m2, where m1≥1.4 and m2≤1.9.

## Description

### TECHNICAL FIELD

The present invention relates to a lithium-ion battery, which belongs to the technical field of secondary batteries.

### BACKGROUND

With the development and advancement of lithium-ion battery technology, increasingly high requirements have been put forward for the capacity of the lithium-ion batteries. In the composition of a lithium-ion battery, the capacity of a positive electrode active material plays a crucial role in the capacity of lithium-ion battery.

To increase the capacity of lithium-ion batteries, the most commonly used method is to increase their charge-discharge voltage. However, as the voltage increases, the positive electrode active material may suffer from crystal structure collapse, which in turn leads to a series of problems such as rapid capacity decay and a significant decrease in cycling performance of the battery.

Therefore, developing a lithium-ion battery with high specific capacity and excellent cycling performance is another critical issue that urgently needs to be solved.

### SUMMARY

The present invention provides a lithium-ion battery. This lithium-ion battery not only has excellent specific capacity at high voltage but also shows excellent performance in terms of cycling performance.

The present invention provides a lithium-ion battery, where the lithium-ion battery includes a positive electrode plate and a negative electrode plate;
the positive electrode active material of the positive electrode plate includes a lithium metal oxide represented by Formula 1 or Formula 2; the lithium metal oxide crystallizes in Cmca space group of a cubic crystal system and exhibits a 002 peak at 2θ of 17.9° to 18.1° and a 131 peak at 2θ of 67.0° to 67.5° in X-ray diffraction(XRD);
the negative electrode plate includes lithium metal, a negative electrode current collector and a negative electrode active layer that are sequentially stacked;
a thickness ratio of the negative electrode plate to the positive electrode plate is m1, and an areal density ratio of the positive electrode plate to the negative electrode plate is m2, where m1≥1.4 and m2≤1.9;

   Li_{n1-y1}Na_{y1}Co_{1-a1-b1}M1_{b1}M2ₐ₁O₂ Formula 1

   Li_{n2-y2-b2}Na_{y2}Co₁₋ₐ₂M1_{b2}M2ₐ₂O₂ Formula 2

   in Formula 1, 0.6≤n1≤0.8, 0<y1≤0.05, 0≤a1≤0.1, 0<b1≤0.1, 0≤b1/(1-a1-b1)<0.1;
   in Formula 2, 0.6≤n2≤0.8, 0<y2≤0.05, 0≤a2≤0.1, 0<b2≤0.02, and M1 is selected from at least one of Te, W, Al, B, P, or K; M2 is a doped element different from M1.

The lithium-ion battery as described above, where the content of lithium metal in the negative electrode plate is not less than 4000 ppm.

The lithium-ion battery as described above, where the thickness of the positive electrode plate is 50 µm-120 µm, and the thickness of the negative electrode plate is 70 µm-168 µm.

The lithium-ion battery as described above, where the areal density of the positive electrode plate is 8.6 mg/cm²-23 mg/cm², and the areal density of the negative electrode plate is 4.7 mg/cm²-11 mg/cm².

The lithium-ion battery as described above, where the areal density of the lithium metal is 0.09 mg/cm²-3.5 mg/cm².

The lithium-ion battery as described above, where the peak intensity of the 002 peak is I1, the peak intensity of the 131 peak is I2, and I1/I2≥3.

The lithium-ion battery is described above, where the positive electrode active material includes the lithium metal oxide and a coating layer covering at least part of the surface of the lithium metal oxide.

The lithium-ion battery is described above, where the positive electrode active material has a core-shell structure with a core of the lithium metal oxide and a coating layer covering the core.

The lithium-ion battery as described above, where the positive electrode plate includes a positive electrode current collector and a positive electrode active layer disposed on at least one functional surface of the positive electrode current collector, the positive electrode active layer contains a positive electrode active material.

The lithium-ion battery as described above, where the positive electrode active layer includes, by mass percentage: 70 wt%-99 wt% positive electrode active material.

The lithium-ion battery is described above, where the negative electrode active layer includes a negative electrode active material, the negative electrode active material is selected from one or more of a carbon material, a silicon material, or a lithium material.

The lithium-ion battery as described above, where the negative electrode active material includes a carbon material and a silicon material.

The lithium-ion battery as described above, where in the negative electrode active material, a mass of the silicon material is 20% or less of a mass of the carbon material.

The lithium-ion battery as described above, where the lithium-ion battery also includes an electrolyte solution.

The lithium-ion battery as described above, where the electrolyte solution includes an additive represented by Formula T;

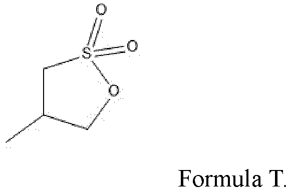

The lithium-ion battery as described above, where a mass percentage content of the additive represented by formula T in the electrolyte solution is 0.1%-10%.

The lithium-ion battery as described above, when the cut-off voltage of the lithium-ion battery is 3.0 V-3.6 V and the state of charge (SOC) is zero, in the lithium metal oxide, 0.7≤n1, n2≤1.0.

The lithium-ion battery as described above, where the median particle size Dv50 of the lithium metal oxide is 12 µm-20 µm.

The lithium-ion battery as described above, for the half-cell containing the lithium metal oxide, a discharge capacity ratio in a first stage C1/C0≥9%, and a discharge capacity ratio in a second stage C2/C0≥25%;

Where C0 represents the discharge capacity of the half-cell containing the lithium metal oxide when discharged at a voltage of 3.0 V-4.55 V. In the discharge process, C1 represents the discharge capacity when the half-cell is discharged from the initial discharge voltage to 4.4 V, and C2 represents the discharge capacity when the half-cell is discharged from 3.8 V to 3.7 V.

In the lithium-ion battery of the present invention, by matching the respective chemical compositions and relevant physical parameters of both the positive and negative electrode plates, it not only enables a high initial efficiency under high-voltage condition, thereby improving the specific capacity of the lithium-ion battery, but also reduces the capacity loss of the lithium-ion battery during long-term charge-discharge cycling and optimizes the cycling performance of the lithium-ion battery.

### BRIEF DESCRIPTION OF THE DRAWINGS

FIG. 1 is a schematic structural diagram of the negative electrode plate of a lithium-ion battery in an embodiment of the present invention.
FIG. 2 is a schematic diagram of a partial area of the negative electrode plate of the lithium-ion battery after the charge-discharge cycle of the present invention.
FIG. 3 is a schematic diagram of detection sites for the electrode plate thickness during the process of detecting the electrode plate thickness of the present invention.
FIG. 4 is an XRD diffraction pattern of the lithium metal oxide 2# of the present invention.
FIG. 5 is a charge-discharge curve of a coin-type battery containing the lithium metal oxide 1# of the present invention.

### DETAILED DESCRIPTIONS OF THE EMBODIMENTS

To make the objective, technical solution, and advantage of the present invention clearer, the technical solution in the embodiments of the present invention will be described clearly in conjunction with the embodiments of the present invention. Obviously, the described embodiments are part of the embodiments of the present invention, rather than all of the embodiments. All other embodiments obtained by those of ordinary skill in the art without creative efforts based on the embodiments in the present invention shall fall within the protection scope of the present invention.

The present invention provides a lithium-ion battery, where the lithium-ion battery includes a positive electrode plate and a negative electrode plate;
a positive electrode active material of the positive electrode plate includes a lithium metal oxide represented by Formula 1 or Formula 2; the lithium metal oxide crystallizes in a Cmca space group of a cubic crystal system and exhibits a 002 peak at 2θ of 17.9° to 18.1° and a 131 peak at 2θ of 67.0° to 67.5° in X-ray diffraction(XRD);
the negative electrode plate includes lithium metal, a negative electrode current collector and a negative electrode active layer that are sequentially stacked;
a thickness ratio of the negative electrode plate to the positive electrode plate is m1, and an areal density ratio of the positive electrode plate to the negative electrode plate is m2, where m1≥1.4 and m2≤1.9;

   Li_{n1-y1}Na_{y1}Co_{1-a1-b1}M1_{b1}M2ₐ₁O₂ Formula 1

   Li_{n2-y2-b2}Na_{y2}Co₁₋ₐ₂M1_{b2}M2ₐ₂O₂ Formula 2

   in Formula 1, 0.6≤n1≤0.8, 0<y1≤0.05, 0≤a1≤0.1, 0<b1≤0.1, 0≤b1/(1-a1-b1)<0.1;
   in Formula 2, 0.6≤n2≤0.8, 0<y2≤0.05, 0≤a2≤0.1, 0<b2≤0.02, and M1 is selected from at least one of Te, W, Al, B, P, or K; M2 is a doped element different from M1.

The present invention does not limit the specific structure of the lithium-ion battery, which may be, for example, a prismatic battery or a cylindrical battery, etc.

The positive electrode plate of the lithium-ion battery may include a positive electrode current collector and a positive electrode active layer disposed on at least one functional surface (the two largest and oppositely disposed surfaces of the current collector) of the positive electrode current collector. The positive electrode active layer at least includes a positive electrode active material, or may also include a conductive agent and a binder. Exemplarily, the positive electrode active layer includes, by mass percentage: 70 wt%-99 wt% positive electrode active material, and further includes 80 wt%-98 wt% positive electrode active material. Exemplarily, the positive electrode active layer includes, by mass percentage: 70 wt%-99 wt% positive electrode active material, 0.5 wt%-15 wt% conductive agent, and 0.5 wt%-15 wt% binder, and further includes 80 wt%-98 wt% positive electrode active material, 1 wt%-10 wt% conductive agent, and 1 wt%-10 wt% binder. The selection of the conductive agent and the binder in the positive electrode plate is not special and may be a conventional selection in conventional technology. For example, the conductive agent is selected from at least one of conductive carbon black, acetylene black, Keqin black, conductive graphite, conductive carbon fiber, carbon nanotube, single-walled carbon nanotube, multi-walled carbon nanotube, or carbon fiber; the binder is selected from at least one of polyvinylidene fluoride (PVDF), polytetrafluoroethylene (PTFE), or lithium polyacrylate (PAALi).

Further, in order to improve safety performance and reduce short-circuits caused by contact between the positive and negative electrode current collectors, a safety layer can also be provided between the positive electrode active layer and the positive electrode current collector. The material of the safety layer is generally a safety material, such as iron-containing compounds (for example, lithium iron phosphate, lithium phosphate, etc.), aluminum-containing compounds (for example, ceramic aluminum oxide), etc. The safety layer can also include a binder, and the ratio of the binder to the safety material can be further determined according to specific requirement.

The positive electrode active material in the positive electrode plate contains the lithium metal oxide represented by Formula 1 or Formula 2. This lithium metal oxide is a compound with a T2-phase stacking structure, specifically an oxide that contains at least lithium, sodium, or cobalt. Further, the lithium metal oxide can also be doped with the M1 element and/or M2 element. The present invention does not limit the specific selection of the M2 element, which can be a common doping element in conventional technology. For example, the M2 element can be at least one of the elements Mg, Ti, Mn, Al, Te, W, Ni, Nb, Zr, La, F, Ce, Sr, Y, K, B, or P.

The present invention does not impose excessive restrictions on y1, y2, a1, a2, b1, b2, and the like within the above-defined ranges.

For example, in Formula 1: y1 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.03, 0.04, or 0.05; a1 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.04, 0.045, 0.05, 0.055, 0.06, 0.065, 0.07, 0.075, 0.08, 0.085, 0.09, or 0.095; b1 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.04, 0.045, 0.05, 0.055, 0.06, 0.065, 0.07, 0.075, 0.08, 0.085, 0.09, 0.095; b1/(1-a1-b1) is 0.005, 0.01, 0.02, 0.03, 0.04, 0.06, 0.08, 0.09, 0.095, or 0.1.

In Formula 2: y2 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.03, 0.04, or 0.05; a2 is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.04, 0.045, 0.05, 0.055, 0.06, 0.065, 0.07, 0.075, 0.08, 0.085, 0.09, or 0.095; b2 is 0.001, 0.002, 0.003, 0.004, 0.005, 0.006, 0.007, 0.008, 0.010, 0.012, 0.015, 0.018, 0.02.

It should be emphasized that the above-mentioned n1 and n2 are parameters related to the lithium content in the positive electrode active material without any charge-discharge treatment. It can be understood that when the positive electrode active material is applied to a lithium-ion battery and subjected to any charge-discharge treatment, the molar content of lithium per molar of the lithium metal oxide varies depending on the charge-discharge mechanisms and at different charge-discharge stages. Therefore, n1 and n2 will also change and may even fall outside the above-defined range.

The negative electrode plate of the present invention includes lithium metal, a negative electrode current collector and a negative electrode active layer that are sequentially stacked. Specifically, the negative electrode active layer includes a negative electrode active material, a conductive agent, and a binder. In a specific embodiment, the negative electrode active layer includes a negative electrode active material or may also include a conductive agent and a binder. Exemplarily, the negative electrode active layer includes, by mass percentage: 70 wt%-99 wt% negative electrode active material, and further includes 80 wt%-98 wt% negative electrode active material. Exemplarily, the negative electrode active layer includes, by mass percentage: 70 wt%-99 wt% negative electrode active material, 0.5 wt%-15 wt% conductive agent, and 0.5 wt%-15 wt% binder, and further includes 80 wt%-98 wt% negative electrode active material, 1 wt%-10 wt% conductive agent, and 1 wt%-10 wt% binder. The selection of the negative electrode active material, the conductive agent, and the binder is not special and can be a conventional selection in the conventional technology. Exemplarily, the negative electrode active material can be selected from one or more of a carbon material, a silicon material, or a lithium material, such as one or more of graphite (e.g., artificial graphite, natural graphite), hard carbon, mesocarbon microbead, lithium titanate, silicon carbide, or silicon monoxide; the conductive agent is selected from at least one of carbon black, acetylene black, Keqin black, or carbon fiber; the binder is selected from at least one of carboxymethyl cellulose, styrene-butadiene rubber, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, polyamideimide, polyvinyl alcohol, or sodium polyacrylate. Further, the negative electrode active material includes the carbon material (e.g., graphite) and the silicon material, where the mass of the silicon material is 20% or less of the mass of the carbon material (e.g., graphite), such as 1%, 2%, 4%, 6%, 8%, 10%, 12%, 14%, 16%, 18%, 20%, or any range composed of any two of these values, so as to be more compatible with the negative electrode plate containing lithium metal.

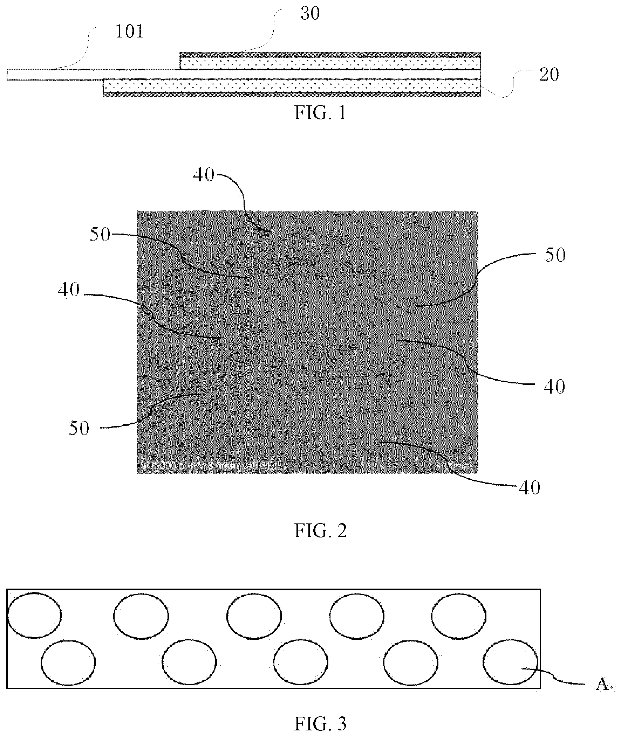

The present invention does not limit the existence form of lithium metal in the negative electrode plate. For example, during the preparation process, the lithium metal may be provided as a separate lithium metal layer on the surface of the negative electrode active layer away from the current collector. Specifically, the negative electrode plate in FIG. 1 includes a negative electrode current collector 101, a negative electrode active layer 20, and a lithium metal layer 30 that are sequentially stacked. The negative electrode plate in FIG. 1 has a double-sided arrangement; it may also be a negative electrode plate in which the negative electrode active layer 20 and the lithium metal layer 30 are provided on a single side of the negative electrode current collector 101. When the negative electrode plate containing the lithium metal layer is assembled with a positive electrode plate and other components to obtain a lithium-ion battery, after the lithium-ion battery undergoes any charge-discharge cycles including formation, at least part of the lithium metal in the lithium metal layer will migrate and intercalate into the positive electrode plate. For a lithium-ion battery that has undergone charge-discharge cycles, after at least part of the lithium metal in the lithium metal layer migrates and intercalates into the positive electrode plate, residual lithium metal will be dispersedly present on the surface of the negative electrode active layer of the negative electrode plate. Generally, the lithium-ion battery can be dismantled, and the SEM surface morphology of the negative electrode plate can be observed to determine whether it includes a lithium metal layer in the negative electrode during the preparation process. When the SEM magnification of the electrode plate is less than or equal to 100, as shown in FIG. 2, if the electrode plate shows regions 40 rich in lithium metal and/or regions 50 with a small amount of lithium metal which both have different contrast, it proves that the negative electrode of the lithium-ion battery includes a lithium metal layer during the preparation process.

The thicknesses of the positive electrode plate and the negative electrode plate mentioned in the present invention refer to the total thickness of the positive electrode plate and the total thickness of the negative electrode plate after disassembling the lithium-ion battery of the present invention. It should be emphasized that before detecting the thicknesses of the positive and negative electrode plates, the lithium-ion battery needs to be in one of the following stages: after formation treatment but before undergoing any additional charge-discharge cycles, or after formation treatment and having undergone no more than 5 charge-discharge cycles. The specific method for detecting the thickness includes the following steps: For a lithium-ion battery in one of the above two stages, first discharge it at 0.2 C to 3.0 V, then disassemble it. As shown in FIG. 3, select 10 first point-like regions A on one side of the electrode plate, and at the same time, select 10 second point-like regions corresponding to the 10 first point-like regions A on the other side of the electrode plate. A thickness measuring instrument is used to detect the thickness between each pair of the corresponding first and second point-like regions, and 10 sets of thickness data of the lithium-ion battery are obtained. The average value of the 10 sets of thickness data represents the thickness of the electrode plate.

The areal density of the positive electrode plate and the negative electrode plate mentioned in the present invention refer to the areal density of the positive electrode plate and the areal density of the negative electrode plate after disassembling the lithium-ion battery of the present invention. Similarly, the disassembled battery also needs to be in one of the above two stages. The specific method for detecting the areal density includes the following steps: After disassembling the lithium-ion battery in one of the above two stages, select 10 first point-like regions on one side of the electrode plate, and at the same time, select 10 second point-like regions corresponding to the 10 first point-like regions on the other side of the electrode plate. A circular electrode plate punching device with a diameter of 15 mm is used to punch the electrode plate between each pair of the corresponding first and second point-like regions, and 10 small circular pieces are obtained. The 10 small circular pieces are weighed respectively, and the average value is Ma mg. At the same time, 10 current collector circular pieces are punched from the current collector of the electrode plate where no active material is coated according to the above method, and the 10 current collector circular pieces are weighed respectively, and the average value is Mb mg. The areal density of the electrode plate is calculated by the formula (Ma-Mb)/(π×1.5×1.5/4), with the unit of mg/cm².

According to the above-mentioned solution provided by the present invention, the lithium-ion battery of the present invention exhibits excellent performance in terms of initial efficiency, specific capacity, and cycle performance. Even under high-voltage operating conditions, the relevant electrical performance of the lithium-ion battery does not deteriorate. Based on this phenomenon, it is believe that, on the one hand, the lithium metal oxide with the above-mentioned crystal characteristics not only has a more perfect layered crystal-phase structure, which can reduce or suppress the occurrence of internal misalignment in the crystal phase, thereby enabling the smooth de-intercalation of lithium ions, but also has multiple lithium-intercalation vacancies. Therefore, the lithium-ion battery with the above-mentioned electrode plate thickness ratio and areal density ratio can show excellent initial efficiency, thus significantly improving the specific capacity. On the other hand, the structural stability of the lithium metal oxide conforming to the structure of Formula 1 or Formula 2 is improved to a certain extent. Therefore, whether in a normal-voltage or high-voltage operating environment, the structurally stable lithium metal oxide is more conducive to improving the efficiency of lithium-ion de-intercalation and promoting the improvement of the cycle performance and specific capacity of the lithium-ion battery.

As mentioned above, for the lithium-ion battery of the present invention that has undergone charge-discharge cycles, at least part of the lithium metal in the lithium metal layer will migrate and intercalate into the positive electrode plate. At this time, the content of the residual lithium metal dispersed on the surface of the negative electrode active layer is not less than 4000 ppm. Specifically, after disassembling the lithium-ion battery, the negative electrode plate can be detected by ICP (Inductively Coupled Plasma).

In a specific embodiment, after disassembling the lithium-ion battery, the thickness of the positive electrode plate is 50 µm-120 µm, the thickness of the negative electrode plate is 70 µm-168 µm; and/or the areal density of the positive electrode plate is 8.6 mg/cm²-23 mg/cm², and the areal density of the negative electrode plate is 4.7 mg/cm²-11 mg/cm². At this time, the specific capacity of the lithium-ion battery is more excellent. Further, the thickness of the positive electrode plate ranges from 65 µm to 100 µm, and the thickness of the negative electrode plate ranges from 86 µm to 125 µm.

In a specific embodiment, the areal density of the lithium metal is 0.09 mg/cm²-3.5 mg/cm².

In one embodiment, in the lithium metal oxide, the peak intensity of the 002 peak is I1, the peak intensity of the 131 peak is I2, and I1/I2≥3. At this time, the internal crystal structure of the lithium metal oxide is more perfect, which is conducive to improving the cycle performance of the battery. Furthermore, I1/I2≥4, and even more preferably, I1/I2≥6.

In addition to the positive promoting effect of the above-mentioned lithium metal oxide on the relevant electrical performance of the battery, when at least part of the surface of the lithium metal oxide is covered with a coating layer, the performance of the battery will be further improved. By providing the coating layer, the positive electrode active material has a core-shell structure with a core of the lithium metal oxide and a coating layer covering the core. This coating layer helps to reduce or suppress the side reactions between the lithium metal oxide and the electrolyte solution. Even when the battery operates in a high-voltage environment, a stable interface can still be formed between the positive electrode active material and the electrolyte solution. By avoiding the excessive dissolution of metal ions in the positive electrode active material and the phenomenon of liquid shortage, the cycle performance of the battery is improved. At the same time, the suppression or reduction of side reactions can also reduce the gas generation inside the battery, thus ensuring the safety performance of the battery.

The present invention does not limit the selection of the coating layer material, as long as it can suppress side reactions and ensure the normal migration of lithium ions. In order to further improve the lithium-ion conductivity, carbon-containing compounds, fast-ion conductors and other materials can be selected for the coating layer.

As mentioned above, in the lithium metal oxide without any charge-discharge treatment, n1 and n2 are between 0.6 and 0.8. After the lithium-ion battery of the present invention is charged and discharged, when the remaining state of charge (SOC) of the lithium-ion battery is 0 (i.e., in a fully discharged state) and the discharge cut-off voltage is 3.0 V-3.6 V, n1 and n2 of the lithium metal oxide are between 0.7 and 1.0. It should be noted that "after the lithium-ion battery is charged and discharged" here means that the number of charge-discharge cycles of the lithium-ion battery after formation is within 10. Specifically, after the lithium metal oxide satisfying the above-mentioned Formula 1 or Formula 2 is applied in charge-discharge processes, its composition will change, especially the molar content of lithium will significantly increase. The reason is that there are some vacancies in the lithium metal oxide with the above-mentioned crystal structure. Therefore, when the lithium-ion battery is subjected to charge-discharge treatment (such as formation), the number of lithium ions de-intercalated between the positive and negative electrodes with the above-mentioned thickness ratio and areal density ratio is further increased. More vacancies in the positive electrode plate can accept a larger number of lithium atoms from the negative electrode plate, thereby increasing the molar content of lithium ions compared with that before the charge-discharge application. This characteristic helps to further improve the cycle performance and specific capacity of the battery.

The detection of the above-mentioned n1 and n2 can be carried out by ICP (Inductively Coupled Plasma). Specifically, the discharged battery is disassembled and the positive electrode plate is taken out. After soaking in dimethyl carbonate (DMC) for 1 h-3 h or rinsing with DMC, the positive electrode plate is air-dried naturally in a drying room, then roasted in a muffle furnace at 300°C-600°C for 2 h-5 h, and sieved through a 200-mesh sieve to obtain the powder to be detected. Subsequently, the metal elements in the powder are detected by ICP, and n1 and n2 are calculated.

The positive electrode active material in the positive electrode plate of the lithium-ion battery of the present invention can have a monocrystal morphology or a polycrystalline morphology. The specific morphology is related to the selection and proportion of its doping elements. Specifically, when the positive electrode active material has a polycrystalline morphology, it appears as spherical or quasi-spherical particle; when the positive electrode active material has a monocrystal morphology, it can be in the shape of whisker, flake, or any other irregular shapes.

Further, the median particle size Dv50 of the positive electrode active material of the present invention is 12 µm-20 µm, for example, 12 µm, 13 µm, 14 µm, 15 µm, 16 µm, 17 µm, 18 µm, 19 µm, or 20 µm. It is found that when the median particle size of the positive electrode active material meets the above requirement, on the one hand, its corresponding specific surface area can accommodate the de-intercalation of more lithium ions; on the other hand, the agglomeration phenomenon among the positive electrode active material is effectively controlled, so that the positive electrode active material can be stably dispersed in the slurry during the pulping process. Exemplarily, the median particle size Dv50 can be detected by a laser particle size analyzer.

It should be noted that the positive electrode active material with the above morphology or median particle size refers to the lithium metal oxide represented by Formula 1 or Formula 2, or the positive electrode active material with a coating layer covering at least part of the surface of the lithium metal oxide represented by Formula 1 or Formula 2.

It is found that when the lithium metal oxide meets the specific element doping and doping ratio, the multiple small discharge platforms during the charge-discharge process of the half-cell containing the lithium metal oxide all exhibit relatively excellent discharge capacities.

In a specific embodiment, for the half-cell containing the lithium metal oxide, a discharge capacity ratio in a first stage C1/C0≥9%, and a discharge capacity ratio in a second stage C2/C0≥25%. Where C0 represents the discharge capacity of the half-cell containing the lithium metal oxide when discharged at a voltage of 3.0 V-4.55 V. In the discharge process, C1 represents the discharge capacity when the half-cell is discharged from the initial discharge voltage to 4.4 V, and C2 represents the discharge capacity when the half-cell is discharged from 3.8 V to 3.7 V. Further, C1/C0≥11%, and the discharge capacity ratio in the second stage C2/C0≥28%.

It should be noted that the above discharge capacity is obtained under a specific discharge mechanism. Specifically, after the half-cell composed of the positive electrode plate containing the lithium metal oxide and the lithium metal negative electrode is charged to a SOC of 100% (the charging mechanism is not particularly limited), a discharge treatment is performed at 3.0 V-4.55 V with a current rate of 0.1C. Among them, the capacity released when discharging from 4.55 V to 4.4 V at 0.1C is defined as C1. When continuing to discharge, the capacity released during the voltage drop stage from 3.8 V to 3.7 V is defined as C2. When continuing to discharge, the total capacity released from the initial discharge to 3.0 V (at this time the SOC is 0) is defined as C0.

Obviously, during the discharge treatment under high-voltage condition, both the proportion of the first-stage discharge capacity and the proportion of the second-stage discharge capacity exhibit excellent performance. Therefore, the positive electrode active material containing the lithium metal oxide of the present invention has strong resistance to high voltage, so the specific capacity of the lithium-ion battery can be improved by increasing the operating voltage.

The present invention does not limit the preparation method of the above lithium metal oxide. In a specific embodiment, the lithium metal oxide of the present invention can be prepared by mixing the sodium metal oxide represented by Formula 1a or Formula 2a with a lithium compound and performing an ion-exchange treatment.

Naₓ₁Co_{1-a1-b1}M1_{b1}M2ₐ₁O₂ Formula 1a; Naₓ₂Co₁₋ₐ₂M1_{b2}M2ₐ₁O₂ Formula 2a

In Formula 1a, 0.68<x1<0.74, 0≤b1<0.1, 0≤a1<0.10, 0≤b1/(1-a1)<0.05; in Formula 2a, 0.68<x2<0.74, 0<b2<0.02, 0≤a2<0.1.

The above ion-exchange treatment is a heat treatment process, specifically referring to heat-treating the mixture of the sodium metal oxide and the lithium compound at 80°C to 300°C for no more than 10 h. That is, the conditions for the ion-exchange treatment may include: a temperature of 80°C to 300°C and a time of within 10 h. After the ion-exchange treatment, the lithium metal oxide is finally obtained by washing and drying the ion-exchanged system. The drying temperature is 80°C-180°C, and the drying time is at least 10 h. The equipment for the ion-exchange treatment and the drying equipment are not limited. For example, the equipment for the ion-exchange treatment may be a closed container with sealing and stirring functions, such as wet coating reaction equipment or coprecipitation reaction equipment; the drying equipment may be a blast drying oven, vacuum drying oven, rotary kiln, tray dryer, or oven.

The above lithium compound may be commonly used lithium source compound in the art, such as at least one of lithium carbonate, lithium chloride, lithium bromide, lithium iodide, lithium nitrate, lithium hydroxide, or lithium fluoride. In the ion-exchange treatment, the mass ratio of the lithium compound to the sodium metal oxide is not less than 1:1, preferably (1-3): 1.

Further, when preparing a positive electrode active material with a coating layer covering the lithium metal oxide, in addition to the raw materials of the sodium metal oxide and the lithium compound, a coating layer raw material needs to be added during the ion-exchange treatment.

For the sodium metal compounds represented by Formula 1a and Formula 2a, exemplarily, they can be prepared by a method including the following process:
A cobalt source, a sodium source, an M1 source, and an M2 source are mixed according to a target ratio and then subjected to calcination treatment to obtain the sodium metal compounds represented by Formula 1a and Formula 2a.

Specifically, the temperature of the calcination treatment is 700°C-900°C, and the time is 8 h-50 h. The calcination treatment can be carried out in an oxygen or air atmosphere. The equipment for the calcination treatment can be, for example, high-temperature sintering equipment such as a muffle furnace, a tunnel furnace, a roller hearth kiln, or a tube furnace.

The mixing of the above-mentioned various sources can be carried out by high-speed mixing equipment, sand-grinding equipment, ball-milling equipment, plow-blade mixing equipment, inclined mixing equipment, etc. It should be noted that if sand-grinding equipment or ball-milling equipment is used and a solvent (water, ethanol, or other solvent media) is added during the ball-milling or sand-grinding process, the mixed system needs to be dried after the mixing treatment is completed. Generally, the mixing time is no more than 4 hours.

The present invention does not limit the specific selection of the cobalt source, sodium source, M1 source, and M2 source. Exemplarily, the cobalt source is selected from one or more of cobalt hydroxide, cobaltosic oxide, doped cobaltosic oxide, cobaltous oxide, cobalt oxyhydroxide, cobalt nitrate, cobalt sulfate and the like; the sodium source is selected from one or more of sodium carbonate, sodium nitrate, sodium hydroxide, sodium bicarbonate, sodium sulfate and the like; the M1 source can be an oxide of M1. When M1 is W, the M1 source is, for example, tungstic acid and/or sodium tungstate and the like; when M1 is Te, the M1 source is, for example, telluric acid and/or sodium tellurate and the like; when M1 is Al, the M1 source is, for example, one or more of aluminum sulfate, aluminum nitrate, or aluminum hydroxide and the like; when M1 is B, the M1 source is, for example, boric acid and/or sodium borate and the like; when M1 is P, the M1 source is, for example, phosphoric acid and/or sodium phosphate and the like; when M1 is K, the M1 source is, for example, one or more of potassium carbonate, potassium nitrate, potassium hydroxide, potassium bicarbonate, or potassium sulfate and the like; the M2 source can be an oxide of M2, such as one or more of basic magnesium carbonate, magnesium hydroxide, zirconium oxide, yttrium oxide, lanthanum oxide, lanthanum fluoride, nickel oxide, or niobium oxide and the like.

In addition to the positive electrode plate and the negative electrode plate, the lithium-ion battery of the present invention also includes a separator.

In addition to the positive electrode plate and the negative electrode plate, the lithium-ion battery of the present invention also includes an electrolyte solution.

Exemplarily, the electrolyte solution is a conventional electrolyte solution known in the conventional technology that includes a lithium salt and a solvent. The solvent contains ethylene carbonate (abbreviated as EC), diethyl carbonate (abbreviated as DEC), propylene carbonate (abbreviated as PC), fluoroethylene carbonate (abbreviated as FEC).

Further, the electrolyte solution also includes an additive represented by Formula T, and its mass percentage content in the electrolyte solution is 0.1%-10%.

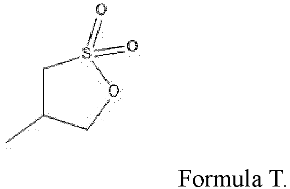

Exemplarily, the separator is a polypropylene-based material, or a coated separator with a single-sided or double-sided ceramic coating on this basis.

The lithium-ion battery of the present invention is suitable for high-voltage system. Specifically, it has excellent energy density and cycle performance at a voltage of ≥4.50 V. Therefore, the lithium-ion battery of the present invention, which has excellent cycle stability and high gram-capacity at a higher voltage such as 4.50 V, can meet the usage requirements of the thinning of high-end digital products.

Hereinafter, the lithium-ion battery of the present invention will be introduced in detail through specific embodiments.

### Lithium Metal Oxide 1#

The preparation method of Lithium Metal Oxide 1# includes the following steps:
Step 1: Weighed 36.56 kg of sodium carbonate powder and 291.05 kg of cobalt nitrate hexahydrate powder, put them into a high-speed mixing device, set the mixing program, mixed at 300 rpm for 3 min, then mixed at 500 rpm for 5 min, and then mixed at 1000 rpm for 10 min, and then took out the mixture. After confirming that there were no white sodium carbonate dots in the mixture, it was considered that the mixture was uniform.
Step 2: Took about 30 kg of the uniformly mixed mixture, evenly loaded it into ceramic crucibles in batches, and used a well-type muffle furnace with the model VBF-1200X for high-temperature sintering. The heating curve for sintering was 5°C/min. When the temperature was raised to 750°C, constant-temperature sintering was carried out for 10 h. After sintering, the sample was taken out after naturally cooling to room temperature, and the sintered compound containing cobalt and sodium, Na_{0.69}CoO₂ was obtained.
Step 3:1.049 kg of lithium hydroxide monohydrate and 34.47 kg of lithium nitrate particles were weighed first. The two lithium compounds were added to a reaction vessel respectively. Then, 10 kg of Na_{0.69}C_{O}O₂ synthesized in Step 2 was weighed and poured into the reaction vessel. After preliminary mixing, ion-exchange was carried out at 280°C for 0.4 h to obtain a crude product.
Step 4: The crude product was washed by suction filtration with deionized water three times and then dried at 90°C for 8 h to obtain Lithium Metal Oxide 1# with the chemical composition of Li_{0.715}Na_{0.02}CoO₂.

### Lithium Metal Oxide 2#

The preparation method of Lithium Metal Oxide 2# includes the following steps:
The preparation method of the positive electrode active material in this embodiment was basically the same as that of Lithium Metal Oxide 1#, except for Step 1. Specifically, in Step 1, 36.56 kg of sodium carbonate powder, 0.21 kg of potassium carbonate powder, 282.31 kg of cobalt nitrate hexahydrate powder, and 1.21 kg of nano-magnesium oxide powder were weighed and put into a high-speed mixing device. The mixing program was set, mixed at 300 rpm for 3 min, then mixed at 500 rpm for 5 min, and then mixed at 1000 rpm for 10 min, the mixture was taken out. After confirming that there were no white sodium carbonate dots in the mixture, it was considered that the mixture was uniform.

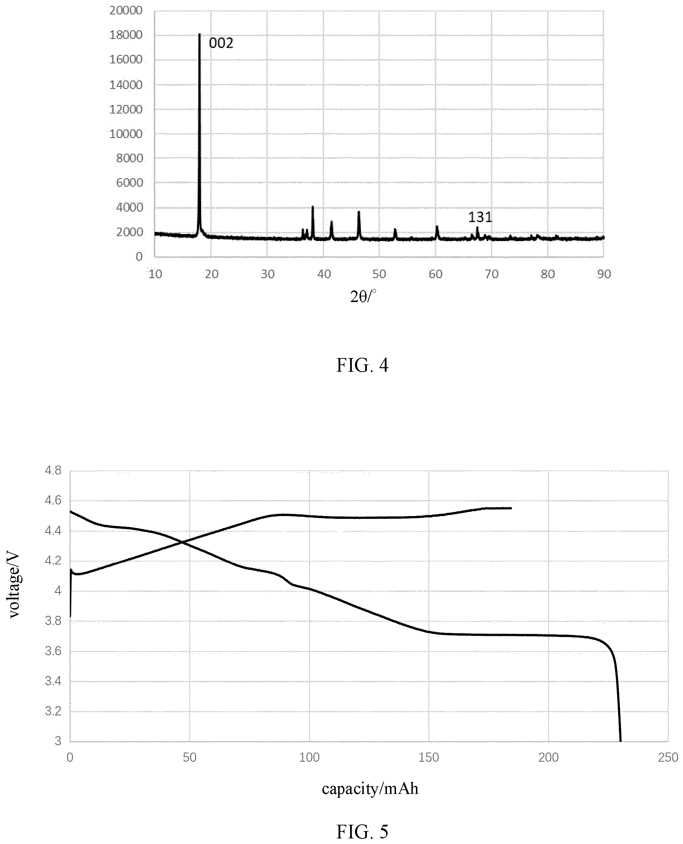

The chemical composition of Lithium Metal Oxide 2# is Li_{0.715}Na_{0.015}K_{0.003}Co_{0.97}Mg_{0.03}O₂. FIG. 4 shows the XRD diffraction pattern of Lithium Metal Oxide 2# of the present invention. As can be seen from FIG. 4, the lithium metal oxide of the present invention crystallizes in the Cmca space group of the cubic crystal system, and the XRD diffraction has a 002 peak at 2θ of 17.9°-18.1° and a 131 peak at 2θ of 67.0°-67.5°.

### Lithium Metal Oxide 3#

The preparation method of Lithium Metal Oxide 3# includes the following steps:
The preparation method of the positive electrode active material in this embodiment was basically the same as that of Lithium Metal Oxide 1#, except for Step 1. Specifically, in Step 1, 36.56 kg of sodium carbonate powder, 0.21 kg of potassium carbonate powder, and 291.05 kg of cobalt nitrate hexahydrate powder were weighed and put into a high-speed mixing device. The mixing program was set, mixed at 300 rpm for 3 min, then mixed at 500 rpm for 5 min, and then mixed at 1000 rpm for 10 min, the mixture was taken out. After confirming that there were no white sodium carbonate dots in the mixture, it was considered that the mixture was uniform.

The chemical composition of Lithium Metal Oxide 3# is Li_{0.715} Na_{0.015}K_{0.003}CoO₂.

### Example 1

The preparation method of the lithium-ion battery in this example includes the following steps:
Step 1: Lithium Metal Oxide 1# was mixed with conductive carbon black and PVDF at a weight ratio of 97.6%:1.2%:1.2%, and a positive electrode slurry was obtained through dispersion. The positive electrode slurry was coated on an aluminum foil current collector (with a thickness of 9 µm), and after rolling and drying, a positive electrode plate with an areal density of 11.52 mg/cm² for the coated positive electrode slurry and a press density of 4.15 g/cm³ was obtained.
Step 2: Commercial artificial graphite 1 (with a specific capacity of 355 mAh/g), styrene butadiene rubber (SBR), sodium carboxymethyl cellulose, and conductive carbon black were mixed at a weight ratio of 96.9%:1.3%:1.3%:0.5%. The mixture was dispersed in water and mixed by a double planetary mixer to obtain a negative electrode slurry. The negative electrode slurry was coated on a copper current collector (with a thickness of 6 µm), and after rolling (with a rolling pressure of 38 tons) and drying, a copper foil-negative electrode active layer laminate with an areal density of 7.16 mg/cm² for the coated negative electrode slurry and a press density of 1.7 g/cm³ was obtained.

Subsequently, a lithium foil with an areal density of 0.1302 mg/cm² was laminated onto the surface of the negative electrode active layer by rolling, and finally, a negative electrode plate containing lithium metal was obtained.

Step 3: The positive electrode plate, the negative electrode plate, and the separator were then assembled into a lithium-ion battery, and 7.1 g of a non-aqueous electrolyte solution was injected. The electrolyte solution was prepared by mixing ethylene carbonate (abbreviated as EC): diethyl carbonate (abbreviated as DEC): propylene carbonate (abbreviated as PC) at a mass ratio of 2:5:3, adding 5% fluoroethylene carbonate (abbreviated as FEC) by mass of the total electrolyte solution, 13% lithium hexafluorophosphate (abbreviated as LiPF₆) by mass of the total electrolyte solution, and the additive represented by Formula T (with a content of 2% by mass of the total electrolyte solution).

Step 4: After final aging, formation, and sorting, a lithium-ion battery with an average capacity of 3403 mAh was obtained.

### Example 2

The preparation method of the lithium-ion battery in this example was basically the same as that in Example 1, with differences in Step 2 and Step 4.

Specifically, in Step 2, the areal density of the coated negative electrode slurry of the negative electrode plate was 7.2 mg/cm²; in Step 4, the capacity of the lithium-ion battery was 3419 mAh.

### Example 3

The preparation method of the lithium-ion battery in this example was basically the same as that in Example 2, with differences in Step 1, Step 2, and Step 4.

Specifically, in Step 1, the positive electrode active material was replaced with Lithium Metal Oxide 2#, and the areal density of the coated positive electrode slurry was 11.42 mg/cm²; in Step 2, the areal density of the lithium foil was 0.1408 mg/cm²; in Step 4, the capacity of the lithium-ion battery was 3410 mAh.

### Example 4

The preparation method of the lithium-ion battery in this example was basically the same as that in Example 3, with differences in Step 2 and Step 4.

Specifically, in Step 2, the negative electrode active material was replaced with graphite 2 (with a specific capacity of 360 mAh/g), and the areal density of the coated negative electrode slurry of the negative electrode plate was 7.06 mg/cm²; in Step 4, the capacity of the lithium-ion battery was 3408 mAh.

### Example 5

The preparation method of the lithium-ion battery in this example was basically the same as that in Example 3, with differences in Step 2 and Step 4.

Specifically, in Step 2, the negative electrode active material was replaced with artificial graphite 2 (with a specific capacity of 360 mAh/g), the areal density of the coated negative electrode slurry of the negative electrode plate was 7.06 mg/cm², the press density was 1.8 g/cm³, and the rolling pressure was 60 tons; in Step 4, the capacity of the lithium-ion battery was 3406 mAh.

### Example 6

The battery preparation and assembly method in Example 6 was basically the same as that in Example 5, with differences in Step 2 and Step 4.

Specifically, in Step 2, the rolling pressure was 70 tons; in Step 4, the capacity of the lithium-ion battery was 3409 mAh.

### Example 7

The battery preparation and assembly method in Example 7 was basically the same as that in Example 5, with differences in Step 2 and Step 4.

Specifically, in Step 2, the rolling pressure was 45 tons; in Step 4, the capacity of the lithium-ion battery was 3407 mAh.

### Example 8

The preparation method of the lithium-ion battery in this example was basically the same as that in Example 5, with differences in Step 2 and Step 4.

Specifically, in Step 2, the negative electrode active material was replaced with a mixture of 97 wt% graphite and 3 wt% silicon dioxide (with a final specific capacity of 395 mAh/g), the areal density of the coated negative electrode slurry of the negative electrode plate was 6.44 mg/cm², the press density was 1.7 g/cm³, and the rolling pressure was 38 tons; in Step 4, the capacity of the lithium-ion battery was 3412 mAh.

### Example 9

The preparation method of the lithium-ion battery in this example was basically the same as that in Example 5, with differences in Step 2 and Step 4.

Specifically, in Step 2, the negative electrode active material was replaced with a mixture of 95 wt% graphite 2 and 5 wt% silicon dioxide (with a final specific capacity of 420 mAh/g), the areal density of the coated negative electrode slurry for the negative electrode plate was 6.05 mg/cm², the press density was 1.7 g/cm³, and the rolling pressure was 38 tons; in Step 4, the capacity of the lithium-ion battery was 3417 mAh.

### Example 10

The preparation method of the lithium-ion battery in this example was basically the same as that in Example 4, with differences in Step 1, Step 2, and Step 4.

Specifically, in Step 1, the positive electrode active material was replaced with Lithium Metal Oxide 3#, and the areal density of the coated positive electrode slurry was 11.31 mg/cm²; in Step 2, the areal density of the lithium foil was 0.1495 mg/cm²; in Step 4, the capacity of the lithium-ion battery was 3420 mAh.

### Comparative Example 1

The preparation method of the lithium-ion battery in this comparative example was basically the same as that in Example 1, with differences in Step 1 and Step 4.

Specifically, in Step 1, the positive electrode active material was replaced with 4.5V high-voltage lithium cobalt oxide 1, whose specific capacity was 186 mAh/g, and the areal density of the coated positive electrode slurry of the positive electrode plate was 13.5 mg/cm²; in Step 4, the capacity of the lithium-ion battery was 3406 mAh.

### Comparative Example 2

The preparation method of the lithium-ion battery in this comparative example was basically the same as that in Example 1, with differences in Step 1, Step 2, and Step 4.

Specifically, in Step 1, the positive electrode active material was replaced with 4.5V high-voltage lithium cobalt oxide 1, whose specific capacity was 186 mAh/g, and the areal density of the coated positive electrode slurry of the positive electrode plate was 13.5 mg/cm² in Step 2, the areal density of the coated negative electrode slurry was 7.45 mg/cm², and no lithium foil was laminated; in Step 4, the capacity of the lithium-ion battery was 3415 mAh.

### Comparative Example 3

The preparation method of the lithium-ion battery in this comparative example was basically the same as that in Example 1, with differences in Step 2 and Step 4.

Specifically, in Step 2, no lithium foil was laminated, and the copper foil-negative electrode active layer laminate was the negative electrode plate of this comparative example; in Step 4, the capacity of the lithium-ion battery was 2660 mAh.

### Comparative Example 4

The preparation method of the lithium-ion battery in this comparative example was basically the same as that in Example 1, with differences in Step 2 and Step 4.

Specifically, in Step 2, the areal density of the coated negative electrode slurry was 5.70 mg/cm²; in Step 4, the capacity of the lithium-ion battery was 2720 mAh.

### Test Example 1

After the positive electrode active materials (Lithium Metal Oxide 1#, Lithium Metal Oxide 2#, Lithium Metal Oxide 3#, 4.5V high-voltage lithium cobalt oxide 1) in all the examples and comparative examples were made into positive electrode plates respectively, coin-type batteries were assembled with negative electrode plates, electrolyte solutions, and separators according to the following method. The method included:

The positive electrode active materials in the examples and comparative examples were mixed with conductive carbon black (SP) and PVDF at a weight ratio of 80%:10%:10% respectively, and positive electrode slurries were obtained through dispersion. The slurries were coated on aluminum foil current collectors, and positive electrode plates were prepared by rolling. Then, the positive electrode plates were punched into small circular pieces with a diameter of 12 mm using a mold. After drying and weighing, in a glove box under an Ar-protected atmosphere, coin-type battery cases of 2025 were used, Li metal circular pieces were used as the negative electrode, and they were assembled with a conventional high-voltage lithium cobalt oxide electrolyte solution into coin-type batteries.

After the obtained coin-type batteries were left to stand for 4 h under a conventional environment, the first charge-discharge capacity test was carried out. The test conditions were: charging to 4.55 V at 0.1C, then charging at a constant voltage until the current reached 0.025C and then stopping, after standing for 3 min, discharging to 3.0 V at 0.1C. During the discharge process, the total first-discharge capacity C0, the first-charge capacity, the discharge capacity C1 from 4.4 to 4.55 V, and the discharge capacity C2 from 3.7 to 3.8 V were recorded respectively, and the first-cycle efficiency, the proportion of the first-stage discharge capacity C1/C0, and the proportion of the second-stage discharge capacity C2/C0 were calculated. The results are shown in Table 1. FIG. 5 shows the charge-discharge curve of the coin-type battery containing Lithium Metal Oxide 1# of the present invention. It can be seen from FIG. 5 that Lithium Metal Oxide 1# of the present invention has a first-cycle efficiency exceeding 100%.

### Test Example 2

The capacity retention rates of the lithium-ion batteries in all the examples and comparative examples were tested. The specific test method was as follows: At 25°C, the batteries were charged at a constant current of 1C to 4.50 V, then charged at a constant voltage of 0.05C to 4.50 V, and then discharged at a constant current of 1C to 3.0 V. This charge-discharge cycle was repeated 500 times. The discharge capacity at the first cycle and the discharge capacity at the 500th cycle were measured. The capacity retention rate after 500 cycles was calculated according to the following formula. The results are shown in Table 2-1 and Table 2-2. Capacity retention rate Q=(Discharge capacity at the 500th cycle)/(Discharge capacity at the first cycle)×100%.

### Test Example 3

After the lithium-ion batteries that have undergone formation in the examples and comparative examples were discharged to 3.0 V at a current of 1/5 of the calibrated capacity, their voltages were tested and found to be 3.0 V-3.6 V. Then, the lithium-ion batteries were disassembled, and the positive and negative electrode plates were taken out. They were soaked in dimethyl carbonate (DMC) for 3 h, naturally dried in a drying room, and then baked in a blast oven at 100°C for 2 h. Then, the positive and negative electrode plates were taken out respectively, and their thicknesses and electrode areal densities were measured according to the aforementioned methods. The test results are shown in Table 2-1 and Table 2-2.

### Test Example 4

After the lithium-ion batteries that have undergone formation in all the examples and comparative examples were discharged to 3.0 V at a current of 1/10 of the calibrated capacity, their voltages were tested and found to be 3.0 V-3.6 V. Then, the lithium-ion batteries were disassembled, and the positive electrode plates were taken out. They were soaked in dimethyl carbonate (DMC) for 3 h or rinsed with DMC, naturally dried in a drying room, and then roasted in a muffle furnace at 300°C for 3 h. After sieving through a 200-mesh sieve, sample powders were obtained. The contents of each element in the sample powders were tested using ICP. The value of n was calculated according to the detected values of elements such as Li and Na. The results are shown in Table 1.

### Test Example 5

After the lithium-ion batteries that have undergone formation in all the examples and comparative examples were discharged to 3.0 V at a current of 1/10 of the calibrated capacity, their voltages were tested and found to be 3.0 V-3.6 V. Then, the lithium-ion batteries were disassembled, and the negative electrode plates were taken out. They were soaked in dimethyl carbonate (DMC) for 3 h or rinsed with DMC. Then, the negative electrode plates were put into water for dissolution and soaking. The negative electrode powders that fell off into the water were collected and dried at 80°C to obtain negative electrode sample powders. The content of the Li element in the negative electrode sample powders was tested using ICP. The results are shown in Table 2-1 and Table 2-2.

**TABLE 1**

| Positive electrode active material number | Sample chemical formula | Charge capacity (mAh/g) | Discharge capacity (mAh/g) | First-cycle efficiency (%) | 20 value of 002 peak(°) | 20 value of 131 peak(°) | Dv50 (µm) | 11/12 | C1/ C0 | C2/ C0 | n value |
|---|---|---|---|---|---|---|---|---|---|---|---|
| Lithium Metal Oxide 1# | Li_{0.715}Na_{0.02} CoO₂ | 184.3 | 230.1 | 124.9 | 18.016 | 67.4619 | 16.7 | 3.76 | 11.06 % | 28.74 % | 0.8412 |
| Lithium Metal Oxide 2# | Li_{0.715}Na_{0.015} K_{0.003}Co_{0.97}Mg _{0.03}O₂ | 182.4 | 232.6 | 127.5 | 17.9897 | 67.43562 | 16.1 | 8.79 | 12.31 % | 29.89 % | 0.8759 |
| Lithium Metal Oxide 3# | Li_{0.715}Na_{0.015} K_{0.003}CoO₂ | 182.1 | 234.2 | 128.6 | 17.9766 | 67.43562 | 15.8 | 7.46 | 12.23 % | 29.67 % | 0.8634 |
| 4.5V high-voltage lithium cobalt oxide 1 | Li_{1.03}CO_{0.984} Al_{0.o1}Mg_{0.002}Y_{0 .002}Ti_{0.002}O₂ | 205.2 | 195.7 | 95.4 | / | / | *15.5* | / | 5.79 % | 0.49 % | / |

**Table 2-1**

| Group | Positive electrode coated areal density (mg/cm²) | Negative electrode coated areal density (mg/cm²) | Negative electrode material specific capacity (mAh/g) | Lithium foil areal density (mg/cm²) | Positive electrode thickness after disassembly (µm) |
|---|---|---|---|---|---|
| Example 1 | 11.52 | 7.16 | 355 | 0.1302 | 68.92 |
| Example 2 | 11.52 | 7.2 | 355 | 0.1302 | 68.78 |
| Example 3 | 11.42 | 7.2 | 355 | 0.1408 | 68.25 |
| Example 4 | 11.42 | 7.06 | 360 | 0.1408 | 68.37 |
| Example 5 | 11.42 | 7.06 | 360 | 0.1408 | 68.33 |
| Example 6 | 11.42 | 7.06 | 360 | 0.1408 | 68.29 |
| Example 7 | 11.42 | 7.06 | 360 | 0.1408 | 68.36 |
| Example 8 | 11.42 | 6.44 | 395 | 0.1408 | 68.17 |
| Example 9 | 11.42 | 6.05 | 420 | 0.1408 | 68.22 |
| Example 10 | 11.31 | 7.06 | 360 | 0.1495 | 67.49 |
| Comparative Example 1 | 13.5 | 7.16 | 355 | 0.1302 | 79.35 |
| Comparative Example 2 | 13.5 | 7.45 | 355 | 0 | 79.3 |
| Comparative Example 3 | 11.52 | 7.16 | 355 | 0 | 68.92 |
| Comparative Example 4 | 11.52 | 5.7 | 355 | 0.1302 | 68.81 |

**Table 2-2**

| Group | Negative electrode thickness after disassembly (9m) | Lithium residue on negative electrode surface (ppm) | Negative to positive electrode thickness ratio m1 | Positive to negative electrode areal density ratio m2 | Battery capacity (mAh) | Capacity retention rate after 500 cycles (%) |
|---|---|---|---|---|---|---|
| Example 1 | 105.57 | 5327 | 1.532 | 1.609 | 3403 | 87.71 |
| Example 2 | 106.02 | 5349 | 1.541 | 1.600 | 3419 | 87.99 |
| Example 3 | 106.1 | 5754 | *1.555* | 1.586 | 3410 | 87.43 |
| Example 4 | 104.02 | 5890 | 1.521 | 1.618 | 3408 | 88.06 |
| Example 5 | 98.58 | 5856 | 1.443 | 1.618 | 3406 | 88.29 |
| Example 6 | 97.69 | 5900 | 1.431 | 1.618 | 3409 | 87.94 |
| Example 7 | 101.21 | 5961 | 1.481 | 1.618 | 3407 | 88.17 |
| Example 8 | 100.63 | 6428 | 1.476 | 1.773 | 3412 | 89.01 |
| Example 9 | 96.29 | 6837 | 1.411 | 1.888 | 3417 | 88.35 |
| Example 10 | 104.23 | 6093 | 1.544 | 1.602 | 3420 | 88.56 |
| Comparative Example 1 | 105.61 | 5378 | 1.331 | 1.885 | 3406 | 80.17 |
| Comparative Example 2 | 109.49 | 278 | 1.381 | 1.812 | 3415 | 82.56 |
| Comparative Example 3 | 105.39 | 240 | 1.529 | 1.609 | 2660 | 84.71 |
| Comparative Example 4 | 85.29 | 6578 | 1.240 | 2.021 | 2720 | 83.69 |

As can be seen from Table 1: the lithium-ion battery of the present invention has a first-cycle efficiency exceeding 100%, more excellent specific capacity, and cycle performance.

Finally, it should be noted that the above embodiments are only used to illustrate the technical solutions of the present invention, rather than limiting them. Although the present invention has been described in detail with reference to the foregoing embodiments, those of ordinary skill in the art should understand that they can still modify the technical solutions described in the foregoing embodiments, or make equivalent substitutions for some or all of the technical features. These modifications or substitutions do not cause the corresponding technical solutions to deviate from the scope of the technical solutions of the embodiments of the present invention.

## Claims

1. A lithium-ion battery, comprising a positive electrode plate and a negative electrode plate;
a positive electrode active material of the positive electrode plate comprises a lithium metal oxide represented by Formula 1 or Formula 2; the lithium metal oxide crystallizes in a Cmca space group of a cubic crystal system and exhibits a 002 peak at 2θ of 17.9° to 18.1° and a 131 peak at 2θ of 67.0° to 67.5° in X-ray diffraction(XRD);
the negative electrode plate comprises lithium metal, a negative electrode current collector and a negative electrode active layer that are sequentially stacked;
a thickness ratio of the negative electrode plate to the positive electrode plate is m1, and an areal density ratio of the positive electrode plate to the negative electrode plate is m2, m1≥1.4 and m2≤1.9;
Li_{n1-y1}Na_{y1}Co₁₋ₐ₁₋₁M1_{b1}M2ₐ₁O₂ Formula 1
Li_{n2-y2-b2}Na_{y2}Co₁₋ₐ₂M1_{b2}M2ₐ₂O₂ Formula 2
in Formula 1, 0.6≤n≤0.8, 0<y1≤0.05, 0≤a1≤0.1, 0≤b1≤0.1, 0≤b1/(1-a1-b1)<0.1;
in Formula 2, 0.6≤n2≤0.8, 0<y2≤0.05, 0≤a2≤0.1, 0<b2≤0.02, and M1 is selected from at least one of Te, W, Al, B, P, or K; M2 is a doped element different from M1.

2. The lithium-ion battery according to claim 1, wherein a content of lithium metal in the negative electrode plate is not less than 4000 ppm.

3. The lithium-ion battery according to claim 1 or 2, wherein a thickness of the positive electrode plate is 50 µm-120 µm, and a thickness of the negative electrode plate is 70 µm-168 µm.

4. The lithium-ion battery according to any one of claims 1-3, wherein an areal density of the positive electrode plate is 8.6 mg/cm²-23 mg/cm², and an areal density of the negative electrode plate is 4.7 mg/cm²-11 mg/cm².

5. The lithium-ion battery according to any one of claims 1-4, wherein an areal density of the lithium metal is 0.09 mg/cm²-3.5 mg/cm².

6. The lithium-ion battery according to any one of claims 1-5, wherein the peak intensity of the 002 peak is I1, and the peak intensity of the 131 peak is I2, and I1/I2≥3.

7. The lithium-ion battery according to any one of claims 1-6, wherein the positive electrode active material comprises the lithium metal oxide and a coating layer covering at least part of the surface of the lithium metal oxide;
preferably, the positive electrode active material has a core-shell structure comprising a core of lithium metal oxide and a coating layer covering the core.

8. The lithium-ion battery according to any one of claims 1-7, wherein when the lithium-ion battery has a cut-off voltage of 3.0 V-3.6 V and a state of charge (SOC) of zero, the lithium metal oxide satisfies 0.7≤n1, n2≤1.0.

9. The lithium-ion battery according to any one of claims 1-8, wherein a median particle size Dv50 of the lithium metal oxide is 12 µm-20 µm.

10. The lithium-ion battery according to any one of claims 1-9, wherein for a half-cell comprising the lithium metal oxide, a discharge capacity ratio in a first stage C1/C0≥9%, a discharge capacity ratio in a second stage C2/C0≥25%;
C0 represents the discharge capacity of the half-cell comprising the lithium metal oxide when discharged at a voltage of 3.0 V-4.55 V; during the discharge process, C1 represents the discharge capacity when the half-cell is discharged from the initial discharge voltage to 4.4 V, C2 represents the discharge capacity when the half-cell is discharged from 3.8 V to 3.7 V.

11. The lithium-ion battery according to any one of claims 1-10, wherein the positive electrode plate comprises a positive electrode current collector and a positive electrode active layer disposed on at least one functional surface of the positive electrode current collector, and the positive electrode active layer comprises a positive electrode active material.

12. The lithium-ion battery according to claim 11, wherein the positive electrode active layer comprises 70 wt%-99 wt% of the positive electrode active material by mass percentage content.

13. The lithium-ion battery according to any one of claims 1-12, wherein the negative electrode active layer comprises a negative electrode active material, and the negative electrode active material is selected from one or more of a carbon material, a silicon material, or a lithium material;
preferably, the negative electrode active material comprises a carbon material and a silicon material.

14. The lithium-ion battery according to claim 13, wherein in the negative electrode active material, a mass of the silicon material is 20% or less of a mass of the carbon material.

15. The lithium-ion battery according to any one of claims 1-14, wherein the lithium-ion battery further comprises an electrolyte solution;
preferably, the electrolyte solution comprises an additive represented by Formula T; 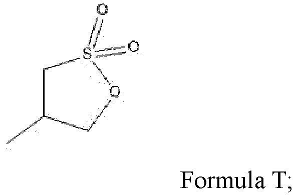 preferably, a mass percentage content of the additive represented by Formula T in the electrolyte solution is 0.1%-10%.
